# EUROPEAN PATENT APPLICATION

(11) **EP 4 682 396 A1**
(43) Date of publication of application: **21.01.2026**
(21) Application number: 24188926.0
(22) Date of filing: 16.07.2024
(51) Int. Cl.: F16D 65/00, F16D 65/092, F16D 65/847

(54) **DISC BRAKING SYSTEM**

(71) Applicant: Volvo Truck Corporation, 405 08 Göteborg (SE)
(72) Inventor: SINGH, Ranjeet, 482001 JABALPUR (IN); MANDAL, Goutam, 732121 MALDA (IN); KUMAR, Amit, 844101 HAJIPUR (IN)
(74) Representative: Kransell & Wennborg KB

(57) **Abstract**

The present disclosure relates to a disc braking system (10), comprising: a brake disc (12); first and second perforated brake pad arrangements (14,16) each comprising a brake pad (52), and each having a backside (18) facing away from the brake disc (12) and a frontside (20) facing the brake disc (12) and being configured to interact with the brake disc (12) upon the disc braking system (10) being operated; an air blowing arrangement (22) arranged to blow air into a space between the frontsides (20) of the first and second brake pad arrangements (14,16) and the brake disc (12); and an air suction arrangement (24) coupled to the backsides (18) of the first and second brake pad arrangements (14,16) and being controllable to suck dust resulting from braking through the first and second brake pad arrangements (14,16), wherein the air blowing arrangement (22) comprises an expansion valve (26), a perforated plate (28), and a diffuser (30) in series.

## Description

### TECHNICAL FIELD

The disclosure relates generally to a disc braking system. In particular aspects, the disclosure relates to a disc braking system with an air blowing and air suction arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Disc brakes for vehicles typically comprise a brake disc fixed to the wheel of the vehicle and a pair of brake pads positioned on respective sides of the brake disc, the brake pads being attached to a pair of brake calipers configured to bring the brake pads into contact with the brake disc. Braking action is provided by the friction created as the brake disc is squeezed between the brake pads.

During braking, the motion energy of the brake disc is converted into heat at the disc brakes. Excessive heat may damage the brakes and eventually lead to brake failing. Furthermore, the friction generated during application of the brakes may lead to abrasion of the brake pads which in turn may lead to the release of harmful particles to the environment and atmosphere. The released particles may also reduce the brake efficiency.

### SUMMARY

According to a first aspect of the disclosure, a disc braking system is disclosed, the disc braking system comprising a brake disc; first and second perforated brake pad arrangements, each having a backside facing away from the brake disc and a frontside facing the brake disc and being configured to interact with the brake disc when the disc braking system is operated; an air blowing arrangement arranged to blow air into a space between the front sides of the first and second brake pad arrangements and the brake disc; and an air suction arrangement coupled to the backsides of the first and second brake pad arrangements and controllable to suck dust resulting from braking through the first and second brake pad arrangements, the air blowing arrangement comprising an expansion valve, a perforated plate, and a diffuser in series.

The first aspect of the disclosure may seek to provide a disc braking system which provides for an air flow through the disc brake during braking. A technical benefit may include efficient cooling and dust removal. The disclosure may further seek to provide a cooled airflow. A technical benefit may include that excessive heating of the disc brake device during braking may be prevented. The cooling of the airflow may be achieved by the expansion valve, which decreases the temperature, velocity and pressure of the airflow.

The disclosure may further seek to provide a streamlined airflow. A technical benefit may include efficient dust removal, as the laminar airflow could guide the trapped particles in a controlled manner, whereby scattering of harmful particles may further be prevented. The streamlining of the airflow may be achieved by guiding of the airflow through the perforated plate.

The disclosure may further seek to provide a low-velocity air-flow. A technical benefit may include more control over the cooling and dust removal. The decrease of the velocity may be achieved by the diffuser.

Optionally in some examples, including in at least one preferred example, the air suction arrangement comprises a venturi tube, the venturi tube comprising a first section defining an inlet of the venturi tube, a second section defining an outlet of the venturi tube, and a third section connecting the first and second sections, the third section having a smaller cross-sectional area than the first and second sections.

A technical benefit may include an efficient and robust a sucking device with few moveable parts which could both suck, store and remove the trapped dust particles from the disc brake.

Optionally in some examples, including in at least one preferred example, the disc braking system further comprises an outlet air filter, the outlet air filter being arranged downstream of the venturi tube, for collecting particles being sucked from the brake pad arrangements by the venturi tube.

A technical benefit may include that harmful particles may be prevented of being discharged into the environment, or into other parts of the vehicle.

Optionally in some examples, including in at least one preferred example, the air blowing arrangement further comprises a tube, the perforated plate being arranged inside the tube such that the airflow through the tube passes through the perforations of the perforated plate.

A technical benefit may include that the airflow may be guided towards and through the perforated plate such that the entire airflow may be streamlined.

Optionally in some examples, including in at least one preferred example, the air blowing arrangement comprises an air compressor arranged upstream of the expansion valve.

A technical benefit may include that the air supplied to the expansion valve already has a certain, controlled pressure, adapted for providing efficient dust removal.

Optionally in some examples, including in at least one preferred example, the air blowing arrangement further comprises an inlet air filter, the inlet air filter being arranged upstream of the air compressor.

A technical benefit may include that the risk of introducing particles into the air blowing system and the disc brake may be avoided.

Optionally in some examples, including in at least one preferred example, the air blowing arrangement further comprises an air tank, the air tank being arranged upstream of the expansion valve.

A technical benefit may include that air could be stored before being supplied to the air blowing system. For example, the most beneficial time for operating an air compressor may not always coincide with a need for cooling and dust removal of the brakes.

Optionally in some examples, including in at least one preferred example, the disc braking system further comprises perforated brake pad holders arranged at the backsides of the brake pads, each brake pad holder comprising a frontside facing the brake pad and a backside opposite to the frontside.

A technical benefit may include that the perforations allow the airflow, and any particles trapped within the airflow, to stream through the brake pad holders such that they may be discharged from the disc brakes.

Optionally in some examples, including in at least one preferred example, each brake pad arrangement further comprises a dust collecting chamber arranged at the backside of the brake pad holder.

A technical benefit may include particles having been removed from the disc brakes by the air blowing system may be collected within the dust collecting chamber until the air suction arrangement is operated. The air suction arrangement may thus be adapted to suck the particles out of the dust collecting chamber.

Optionally in some examples, including in at least one preferred example, the disc braking system further comprises a brake pad cover connected to the brake pad holder, the dust collecting chamber being formed between the brake pad holder and the back cover.

A technical benefit may include that the dust collecting chamber is formed between two structural members of the brake disc, whereby a simple solution with few additional parts may be provided.

Optionally in some examples, including in at least one preferred example, the brake pad cover comprises a through opening configured to fluidly connect the dust collecting chamber to the air suction arrangement.

A technical benefit may include that the dust particles may be sucked from the dust collecting chamber, by the air suction arrangement, through said through opening.

Optionally in some examples, including in at least one preferred example, the disc braking system further comprises a pipe attached between the brake pad cover and the third section of the venturi tube, the pipe being configured to fluidly connect the venturi tube to the dust collecting chamber via the through opening.

The venturi tube may thus be both mechanically and fluidically connected to the dust collecting chamber through said pipe.

Optionally in some examples, including in at least one preferred example, the air suction assembly comprises an air moving device configured to provide an airflow through the venturi tube in a direction from the first section and towards the second section.

A technical benefit may include that the air flow through the tube in turn generates a suction force for suction of particles, due to the form of the venturi tube.

Optionally in some examples, including in at least one preferred example, the disc braking system further comprises a control valve configured to control the airflow provided by the air moving device.

A technical benefit may include that the suction force may be controlled by controlling the velocity of the airflow through the venturi. The suction force may thus be adapted to the current situation, such as to the amount of dust trapped in the dust collecting chamber.

Optionally in some examples, including in at least one preferred example, the control valve is controlled by an ECU.

According to a second aspect of the disclosure, a vehicle is disclosed, the vehicle comprising the disc braking system according to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**Fig. 1** is a schematic illustration of an exemplary disc braking system according to an example.
**Fig. 2** is a schematic illustration of an exemplary brake pad arrangement according to an example.
**Fig. 3** is an illustration of a vehicle comprising a disc braking assembly according to an example.
**Fig. 4** is another view of **Fig. 1****,** according to an example.

### DETAILED DESCRIPTION

The detailed description set forth below provides information and examples of the disclosed technology with sufficient detail to enable those skilled in the art to practice the disclosure.

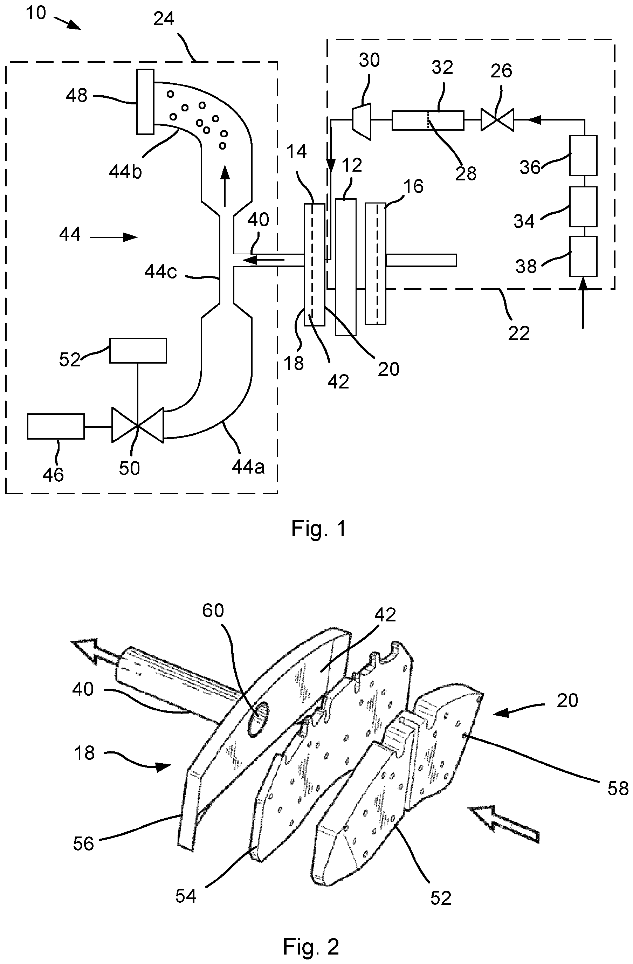

**Fig. 1** shows an exemplary disc braking system 10 according to an example. The braking system is configured to be arranged on a vehicle 100.

The disc braking system 10 comprises a brake disc 12 and first and second brake pad arrangements 14, 16. During braking of the vehicle 100, the brake pads arrangements are brought towards and into contact with the brake disc 12, such that the brake disc 12 is squeezed between the brake pad arrangements 14, 16 whereby its rotation is interrupted.

In the following, reference will be made only to the features of the first brake pad arrangement 14, but it is understood that the second brake pad arrangement 16 comprises corresponding features.

The brake pad arrangement 14 comprises backside 18 facing away from the brake disc 12 and a frontside 20 facing the brake disc 12 and being configured to interact with the brake disc 12 during braking. The brake pad arrangement 14 is perforated to allow an airflow through the brake pad arrangement 14.

An air blowing arrangement 22 is arranged to blow air into a space formed between the frontside 20 of the brake pad arrangement 14 and the brake disc 12. Furthermore, an air suction arrangement 24 is coupled to the backside 18 of the brake disc arrangement 14 and configured to suck dust resulting from braking through the brake pad arrangement 14.

The air blowing arrangement is configured to provide cooling of the brake system, while contributing to the removal of dust. To achieve this, the air blowing arrangement 22 is configured such that it provides a streamlined low temperature flow with a high pressure at the frontside 20 of the brake pad 14.

To achieve the desired flow, the air blowing arrangement 22 comprises an expansion valve 26, a perforated plate 28, and a diffuser 30 arranged in series in the direction of the air flow. The expansion valve 26 is thus arranged upstream of the perforated plate 28, and the perforated plate 28 is in turn arranged upstream of the diffuser 30. The diffuser 30 is arranged closest to the brake pad arrangement 14.

The expansion valve 26 is configured to control the temperature, pressure and velocity of the air supplied to the air blowing arrangement 22. Thus, the air leaving the expansion valve 22 at an outlet side has a lower temperature, a lower pressure and a lower velocity than at an inlet side.

The airflow leaving the expansion valve may be highly turbulent, which is undesired as it provides poor control over the cooling and dust removal.

The perforated plate 28 is thus configured to streamline the air leaving the expansion valve 26, by forcing the air through the perforations. The perforated plate 28 may be arranged within a tube 32, such that air directed through the tube 32 is forced through the perforations of the perforated plate 28.

The diffuser 30 is configured to reduce the velocity of the airflow, while increasing the pressure. To achieve this, the diffuser may comprise a duct having an inlet and an outlet, the cross-sectional flow area of the duct increasing in the direction from the inlet towards the outlet.

The airflow leaving the diffuser 30, after having passed the expansion valve 26 and the perforated plate 28, may thus be a high pressure, low temperature streamlined air flow suitable for both efficient cooling of the brake system and for removal of dust.

The air blowing arrangement 22 may further comprise a compressor 34 arranged upstream of the expansion valve 26. The compressor 34 is configured to take in air, such as from the exterior of the vehicle, and to increase the pressure of the air before providing it to the expansion valve 26.

The air blowing arrangement 22 may further comprise an air tank 36 arranged downstream of the compressor 34 and upstream of the expansion valve 22. The pressurized air from the compressor may thus be stored in the air tank 36 until it is determined to activate the air blowing arrangement 22. For example, the air blowing arrangement 22 may be activated during braking of the vehicle.

An inlet air filter 38 may further be arranged upstream of the compressor 34, to ensure that the air being introduced to the air blowing system 22 is clean.

The air suction arrangement 24 may be connected to the backside 18 of the brake pad 14 by a pipe 40. As will be more clearly described in relation to Fig. 2, the pipe 40 may be fluidly connected to a dust collecting chamber 42 of the brake pad arrangement 14.

The air suction arrangement 24 may further comprise a venturi tube 44. The venturi tube 44 is fluidly connected to the pipe 40 to create an under pressure within the pipe 40, such that particles may be sucked from the dust collecting chamber 42 through the pipe 40.

The venturi tube 44 comprises a first section 44a and a second section 44b, the first and second sections 44a, 44b being connected by a third section 44c having a smaller cross-sectional area than the first and second sections 44a, 44b. The first section 44a defines a venturi inlet at its free end, while the second section 44b defines a venturi outlet at its free end, the term "free end" referring to the ends of the sections 44a, 44b not being connected to the third section 44c. The pipe 40 is fluidly connected to the venturi tube 44 at the third section 44c.

An air moving device 46, such as a fan, an air pump and/or a compressor may be arranged at an end of the first section 44a of the venturi tube 44. The air moving device 46 is configured to supply a venturi airflow through the venturi tube 44. As the venturi airflow reaches the third section 44c, the smaller cross section leads to an increase in velocity of the airflow at the third section 44c which in turns decreases the air pressure at the third section 44c. Thus, it is this decrease in air pressure which provides a suction force to the pipe 40, allowing air and particles to be sucked through the pipe 40, and to be transported to the second section of the venturi tube 44 by the venturi airflow.

The air suction device 24 may further comprise an outlet filter 48. the outlet filter being arranged at an end of the second section 44b of the venturi tube 44. The outlet filter 48 may thus be configured to collect any particles carried by the venturi airflow before the air is released to atmosphere.

To control the airflow into the venturi tube 44, a control valve 50 may further be arranged at the inlet of the first section 44a. The control valve may in turn be actuated by an electric control unit (ECU) 52 to control the venturi airflow, such as to achieve desired sucking action by the venturi tube 44.

**Fig. 2** is a schematic illustration of an exemplary brake pad arrangement according to an example. The brake pad arrangement in Fig.2 may for example be the first brake pad arrangement 14.

The brake pad arrangement 14 illustrated in Fig.2 comprises a brake pad 52, a brake pad holder 54 and a brake pad cover 56.

As already described, the brake pad arrangement 14 comprises backside 18 facing away from the brake disc 12 and a frontside 20 facing the brake disc 12 and being configured to interact with the brake disc 12 during braking.

The brake pad 52 is arranged at the frontside 20 of the brake pad arrangement 20, and it is the part of the brake pad arrangement 20 which is configured to contact the brake disc 12 during braking. The brake pad 52 of the present disclosure is a perforated brake pad 52, meaning that the brake pad 52 comprises a plurality of through-holes 58 configured to allow air and particles to flow through the brake pad 52. The through-holes 58 of the brake pad 52 may for example have a diameter of 3-9 mm, such as approximately 6 mm and be evenly distributed over the brake pad 52.

The brake pad 52 is attached to a brake pad holder 54. Similar to the brake pad 52, the brake pad holder comprises a plurality of through-holes configured to allow air and particles to flow through the brake pad holder 56.

A brake pad cover 56 is further attached to the brake pad holder 54 at a side opposite to the brake pad 52. The brake pad cover 56 thus constitutes the backside 18 of the brake pad arrangement 14. The brake pad cover 56 is provided with a circumferential ledge 62, such that a dust collecting chamber 42 is formed between the brake pad holder 54 and the brake pad cover 56.

The pipe 40 may be attached to the backside of the brake pad cover 56; that is, to the side opposite to the side which is attached to the brake pad holder 54, and the brake pad cover 56 further comprises a through opening 60 for fluidly connecting the dust collecting chamber 42 to the pipe 40.

The structure of the brake pad arrangement 14 is thus configured to allow an airflow, such as the laminar, high pressure, low-temperature airflow generated by the air blowing arrangement 22, to collect particles generated during braking at the frontside 20 of the brake pad arrangement 14, and to pass said particles, carried by the generated airflow, through the perforations of brake pad 52 and brake pad holder 54.

As the particle containing airflow reaches the dust collecting chamber, the air suction arrangement 24 is activated to suck the particles out of the dust collecting chamber through the pipe 40, whereafter the particles may be discharged to the atmosphere, or trapped by the outlet filter 48.

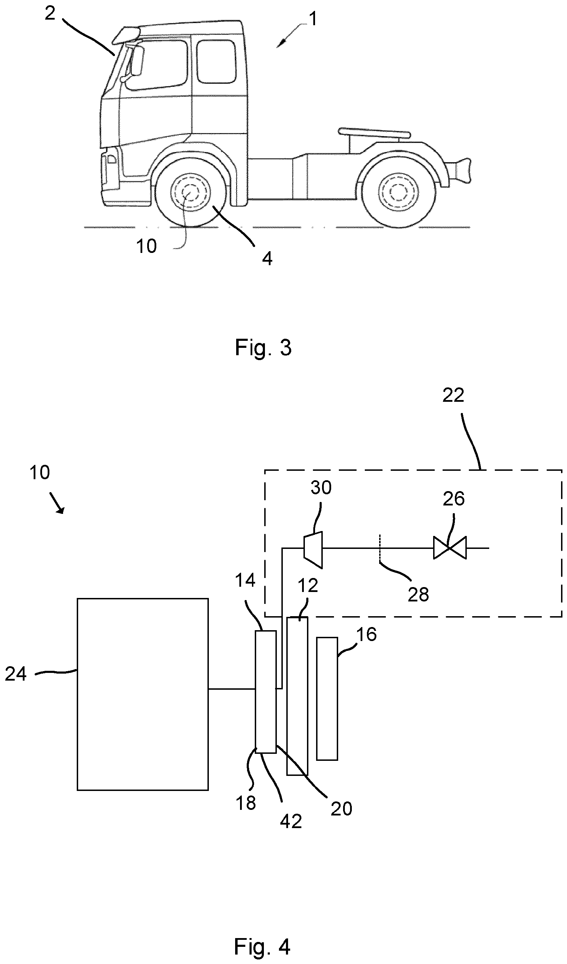

**FIG. 3** is an illustration of a vehicle 1 comprising a disc braking assembly 10 according to an example. Although the vehicle 1 is illustrated in the form of a truck, other types of vehicles, such as busses, construction equipment, trailers or passenger cars may be provided in accordance with the invention.

The vehicle 1 comprises a cab 2 in which a driver may operate the vehicle 1. The vehicle 1 comprises a number of road wheels 4, herein illustrated as two pairs of wheels, however in other embodiments there may be a different number of wheels, such as three pairs, four pairs or more. In the cab 2 a driver may press a brake pedal with his/her foot in order to activate the brake or brakes. Activation of the brake causes brake pads of the disclosed disc braking assembly 10 to be pressed against the brake disc (not illustrated in FIG. 3) connected via a wheel end hub to an axle that rotates the road wheels 4.

**FIG. 4** is another view of **FIG. 1****,** according to an example. **Fig 4** discloses disc braking system 10, comprising: a brake disc 12; first and second perforated brake pad arrangements 14,16 each comprising a brake pad 52, and each having a backside 18 facing away from the brake disc 12 and a frontside 20 facing the brake disc 12 and being configured to interact with the brake disc 12 upon the disc braking system 10 being operated; an air blowing arrangement 22 arranged to blow air into a space between the frontsides 20 of the first and second brake pad arrangements 14,16 and the brake disc 12; and an air suction arrangement 24 coupled to the backsides 18 of the first and second brake pad arrangements 14,16 and being controllable to suck dust resulting from braking through the first and second brake pad arrangements 14,16, wherein the air blowing arrangement 22 comprises an expansion valve 26, a perforated plate 28, and a diffuser 30 in series.

### EXAMPLES:

**Example 1:** A disc braking system 10, comprising: a brake disc 12; first and second perforated brake pad arrangements 14,16 each comprising a brake pad 52, and each having a backside 18 facing away from the brake disc 12 and a frontside 20 facing the brake disc 12 and being configured to interact with the brake disc 12 upon the disc braking system 10 being operated; an air blowing arrangement 22 arranged to blow air into a space between the frontsides 20 of the first and second brake pad arrangements 14,16 and the brake disc 12; and an air suction arrangement 24 coupled to the backsides 18 of the first and second brake pad arrangements 14,16 and being controllable to suck dust resulting from braking through the first and second brake pad arrangements 14,16, wherein the air blowing arrangement 22 comprises an expansion valve 26, a perforated plate 28, and a diffuser 30 in series.
**Example 2:** The disc braking system 10 of example 1, wherein the air suction arrangement 24 comprises a venturi tube 44, the venturi tube 44 comprising a first section 44a defining an inlet of the venturi tube 44, a second section 44b defining an outlet of the venturi tube 44, and a third section 44c connecting the first 44a and second 44b sections, the third section 44c having a smaller cross-sectional area than the first 44a and second 44b sections.
**Example 3:** The disc braking system 10 according to example 2, further comprising an outlet air filter 48, the outlet air filter 48 being arranged downstream of the venturi tube 44, for collecting particles being sucked from the brake pad arrangements 14,16 by the venturi tube 44.
**Example 4:** The disc braking system 10 of any of examples 1-3, wherein the air blowing arrangement 22 further comprises a tube 32, the perforated plate 28 being arranged inside the tube 32 such that the airflow through the tube 32 passes through the perforations 58 of the perforated plate 28.
**Example 5:** The disc braking system 10 of any of examples 1-4, wherein the air blowing arrangement 22 comprises an air compressor 34 arranged upstream of the expansion valve.
**Example 6:** The disc braking system 10 of any of examples 1-5, wherein the air blowing arrangement 22 further comprises an inlet air filter 38, the inlet air filter 38 being arranged upstream of the air compressor 34.
**Example 7:** The disc braking system 10 of any of examples 1-6, wherein the air blowing arrangement 22 further comprises an air tank 36, the air tank 36 being arranged upstream of the expansion valve 26.
**Example 8:** The disc braking system 10 of any of examples 1-7, further comprising perforated brake pad holders 54 arranged at the backsides of the brake pads 52, each brake pad holder 54 comprising a frontside facing the brake pad 52 and a backside opposite to the frontside.
**Example 9:** The disc braking system 10 of any of examples 1-8, wherein each brake pad arrangement 14, 16 further comprises a dust collecting chamber 42 arranged at the backside of the brake pad holder 54.
**Example 10:** The disc braking system 10 of example 9 further comprising a brake pad cover 56 connected to the brake pad holder 54, the dust collecting chamber 42 being formed between the brake pad holder 54 and the back cover 56.
**Example 11:** The disc braking system 10 of example 10, wherein the brake pad cover 56 comprises a through opening 60 configured to fluidly connect the dust collecting chamber 42 to the air suction arrangement 24.
**Example 12:** The disc braking system 10 of example 11, when dependent on example 2, further comprising a pipe 40 attached between the brake pad cover 56 and the third section 44c of the venturi tube 44, the pipe 40 being configured to fluidly connect the venturi tube 44 to the dust collecting chamber 42 via the through opening.
**Example 13:** The disc braking system 10 of any of examples 2-12, wherein the air suction assembly 24 comprises an air moving device 46 configured to provide an airflow through the venturi tube 44 in a direction from the first section 44a and towards the second section 44b.
**Example 14:** The disc braking system 10 of example 13 further comprising a control valve 50 configured to control the airflow provided by the air moving device 46.
**Example 15:** The disc braking system 10 of example 14, wherein the control valve 50 is controlled by an ECU.
**Example 16:** A vehicle 1 comprising the disc braking system 10 according to any of examples 1-15.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A disc braking system (10), comprising:
a brake disc (12);
first and second perforated brake pad arrangements (14,16) each comprising a brake pad (52), and each having a backside (18) facing away from the brake disc (12) and a frontside (20) facing the brake disc (12) and being configured to interact with the brake disc (12) upon the disc braking system (10) being operated;
an air blowing arrangement (22) arranged to blow air into a space between the frontsides (20) of the first and second brake pad arrangements (14,16) and the brake disc (12); and
an air suction arrangement (24) coupled to the backsides (18) of the first and second brake pad arrangements (14,16) and being controllable to suck dust resulting from braking through the first and second brake pad arrangements (14,16),
wherein the air blowing arrangement (22) comprises an expansion valve (26), a perforated plate (28), and a diffuser (30) in series.

2. The disc braking system (10) of claim 1, wherein the air suction arrangement (24) comprises a venturi tube (44), the venturi tube (44) comprising a first section (44a) defining an inlet of the venturi tube (44), a second section (44b) defining an outlet of the venturi tube (44), and a third section (44c) connecting the first (44a) and second (44b) sections, the third section (44c) having a smaller cross-sectional area than the first (44a) and second (44b) sections.

3. The disc braking system (10) according to claim 2, further comprising an outlet air filter (48), the outlet air filter (48) being arranged downstream of the venturi tube (44), for collecting particles being sucked from the brake pad arrangements (14,16) by the venturi tube (44).

4. The disc braking system (10) of any of claims 1-3, wherein the air blowing arrangement 22 further comprises a tube (32), the perforated plate (28) being arranged inside the tube (32) such that the airflow through the tube (32) passes through the perforations (58) of the perforated plate (28).

5. The disc braking system (10) of any of claims 1-4, wherein the air blowing arrangement (22) comprises an air compressor (34) arranged upstream of the expansion valve.

6. The disc braking system (10) of any of claims 1-5, wherein the air blowing arrangement (22) further comprises an inlet air filter (38), the inlet air filter (38) being arranged upstream of the air compressor (34).

7. The disc braking system (10) of any of claims 1-6, wherein the air blowing arrangement (22) further comprises an air tank (36), the air tank (36) being arranged upstream of the expansion valve (26).

8. The disc braking system (10) of any of claims 1-7, further comprising perforated brake pad holders (54) arranged at the backsides of the brake pads (52), each brake pad holder (54) comprising a frontside facing the brake pad (52) and a backside opposite to the frontside.

9. The disc braking system (10) of any of claims 1-8, wherein each brake pad arrangement (14, 16) further comprises a dust collecting chamber (42) arranged at the backside of the brake pad holder (54).

10. The disc braking system (10) of claim 9 further comprising a brake pad cover (56) connected to the brake pad holder (54), the dust collecting chamber (42) being formed between the brake pad holder (54) and the back cover (56).

11. The disc braking system (10) of claim 10, wherein the brake pad cover (56) comprises a through opening (60) configured to fluidly connect the dust collecting chamber (42) to the air suction arrangement (24).

12. The disc braking system (10) of claim 11, when dependent on claim 2, further comprising a pipe (40) attached between the brake pad cover (56) and the third section (44c) of the venturi tube (44), the pipe (40) being configured to fluidly connect the venturi tube (44) to the dust collecting chamber (42) via the through opening.

13. The disc braking system (10) of any of claims 2-12, wherein the air suction assembly (24) comprises an air moving device (46) configured to provide an airflow through the venturi tube (44) in a direction from the first section (44a) and towards the second section (44b).

14. The disc braking system (10) of claim 13 further comprising a control valve (50) configured to control the airflow provided by the air moving device (46).

15. A vehicle (1) comprising the disc braking system (10) according to any of claims 1-14.
